# EUROPEAN PATENT SPECIFICATION

(11) **EP 2 188 907 B1**
(45) Date of publication and mention of the grant of the patent: **29.08.2012**
(21) Application number: 08803800.5
(22) Date of filing: 05.09.2008
(51) Int. Cl.: H04B 1/707, G01S 1/00

(54) **METHOD AND DEVICE FOR MULTIPATH MITIGATION**
VORRICHTUNG UND VERFAHREN ZUR MEHRPFAD-ABSCHWÄCHUNG
DISPOSITIF, ET PROCÉDÉ DE RÉDUCTION DE TRAJETS MULTIPLES

(30) Priority: 07.09.2007 EP 07115958
(43) Date of publication of application: 26.05.2010
(73) Proprietor: Septentrio N.V., 3001 Leuven (BE)
(72) Inventor: DE WILDE, Wim, B-3010 Kessel-Lo (BE); SLEEWAEGEN, Jean-Marie, B-1090 Jette (BE)
(74) Representative: pronovem
(86) International application number: PCT/EP2008/061831
(87) International publication number: WO 2009/030772

(56) References cited:
- US-B1- 6 493 378
- US-B1- 6 744 404
- DOVIS F, LO PRESTI L, FANTINO M, MULASSANO P: "Comparative Analysis of Optimized Signals for Satellite Navigation Systems" GRUPPO TELECOMUNICAZIONI E TECNOLOGIE DELL'INFORMAZIONE - GTTI, MEETING 2007, [Online] 18 June 2007 (2007-06-18), - 20 June 2007 (2007-06-20) XP002518906 Rome, Italy Retrieved from the Internet: URL:http://www.gtti.it/GTTI07/papers/Lopre sti_GTTI_2007_Optimized_Signals.pdf> [retrieved on 2009-03-12]

## Description

### Field of the invention

The present invention relates to a method and apparatus for receiving and processing signals of the spread spectrum type as used in global navigation satellite systems (GNSS).

### State of the art

Today, satellite based positioning systems are widely in use. Most known is the Global Positioning System (GPS) developed by the United States Government. Other systems are the Galileo system which is currently in development by the European Space Agency (ESA), the Russian system GLONASS and the Chinese Compass system. The primary purpose of these systems is to provide position, velocity and time to any user on or near the earth's surface. The user determines his position in space and time by measuring his range to at least four satellites whose position and time are accurately determined, the range being defined as the distance between the user and a satellite.

The satellites of a satellite based positioning system transmit signals on several L-band carriers. The carriers are modulated by a spreading code that consists of consecutive chips, the polarity of which being determined by a pseudo-random code (PRN) and each chip of the PRN code mapping to a particular pulse. For so-called BPSK modulations the pulse has a rectangular shape. In many recently introduced signals (modernised GPS, Galileo) the pulse consists of a fragment of a square wave. Such modulation is referred to as Binary Offset Carrier signals (BOC) and the square wave is referred to as the subcarrier. In the commonly used notation BOC(M,N) M refers to the subcarrier frequency in units of 1.023 MHz whereas N refers to the chipping frequency in the same unit. The ratio 2.M/N is always an integer and the subcarrier phase has a defined shift with respect to the PRN code transients. More complex pulse shapes are considered for future signals as well. In AltBOC (Alternate Binary Offset Carrier) modulation the pulse is a multi-level piece-wise constant complex signal. In MBOC (Multiplexed Binary Offset Carrier) the pulse is a superposition of two BOC pulses with a different subcarrier rate.

Each satellite uses unique PRN codes. The separation between satellites is possible because the PRN codes do not correlate with each other. The spreading codes are modulated by the navigation message that provides information about the satellite position. The times at which the satellites start sending the navigation message are synchronised.

At the receiver side, the base-band signal is recovered after removing the residual carrier offset caused by the Doppler effect and clock mismatch. The base-band signal consists of the spreading code buried in noise. Signal tracking involves the synchronisation of a local replica of the spreading code dedicated to the satellite to be tracked with the received spreading code. The timing differences between the local replicas for different satellites (combined with navigation message alignment) provide the ranging information for calculating the receiver position. Hence, any error in synchronisation of the local replica results in a positioning error.

Synchronising the local replica involves two steps. First a coarse synchronisation needs to be obtained. This is called acquisition. Usually this is accomplished by correlating (i.e. integrating the multiplication of both signals) the advanced local replica with the input signal and gradually delaying this code until the correlation results in a peak.

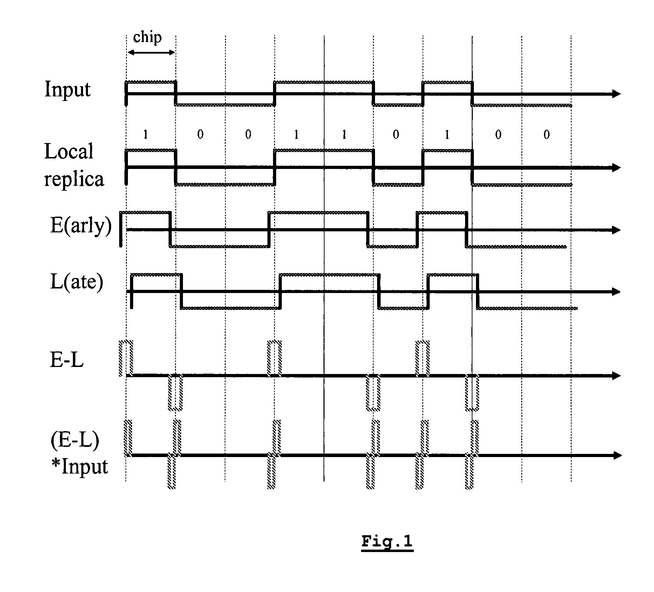

Once acquired, the second step is tracking the spreading code. An advanced (early (E)) and a delayed (late (L)) version of the local replica is generated thereto. The delay between the early and late replicas is called the tracking gate width. The difference signal E-L of both replicas is correlated with the base-band input signal. The output of this correlation is called the discriminator. This is illustrated for a BPSK signal in Fig.1. If the local replica is well-synchronised with the input signal, like in the figure, it can be seen that the multiplication of the E-L signal with the input signal (see last graph of the figure) has zero mean: the correlation of these two signals is zero, and thus the discriminator output is zero. If the local replica was delayed with respect to the input signal the correlation would be positive. Conversely, if the local replica was advanced the correlation would be negative. This provides feedback: a positive discriminator output indicates the local replica needs to be speeded up, a negative output that it needs to be slowed down. For completeness it is mentioned that the discriminator is usually normalized by the correlation of the local replica and input signal.

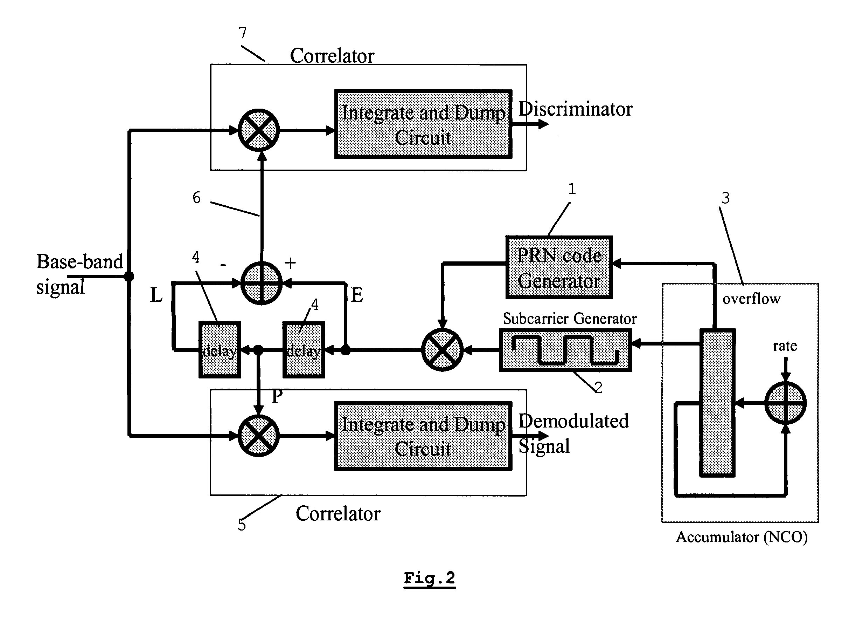

The prior art implementation of a tracking channel is illustrated in Fig.2. A local replica is generated by multiplying the PRN chips coming from the PRN code generator 1 with the subcarrier waveform coming from the subcarrier generator 2. The chipping rate and the subcarrier frequency are controlled by a so-called numerically controlled oscillator (NCO) 3, which is typically a digital accumulator programmed to overflow at the chipping rate. An early (E), punctual (P) and late (L) version of that local replica is generated by "delay" blocks 4. The punctual replica is correlated in correlator 5 with the received base-band signal to yield the punctual correlation, which is used for signal demodulation, and the difference 6 between the early and late replicas is correlated in correlator 7 with the received base-band signal to yield the discriminator. The correlators are shown as a combination of a multiplier and an integrate and dump circuit.

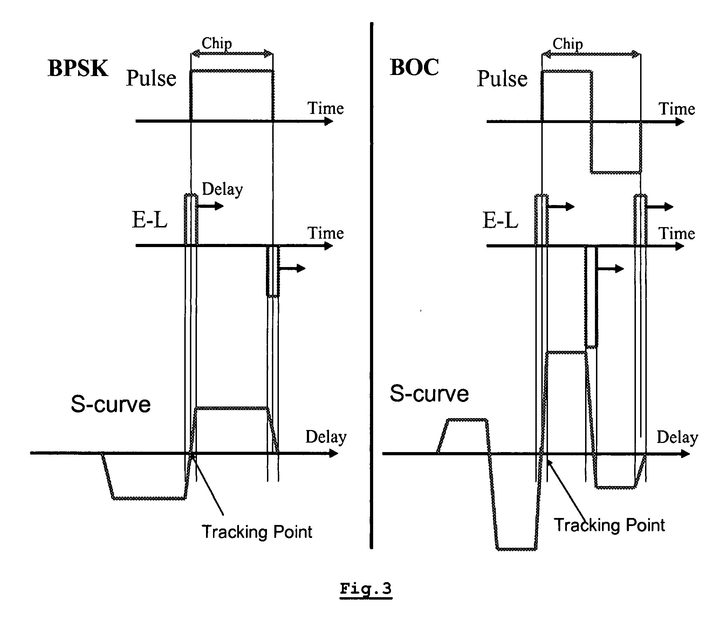

Often the discriminator is plotted as a function of the delay of the local replica with respect to the input signal. This plot is commonly referred to as the S-curve. Fig.3 shows the S-curves for BPSK and BOC(N,N) signals. The S-curve can be evaluated from a single chip, because successive chips are not correlated due to the PRN code properties. To obtain the S-curves in Fig.3 the shifted difference of an early and a late version of the local chip pulse has been multiplied and integrated with the fixed (input) pulse.

The discriminator is subject to noise. This causes spurious positive and negative outputs and leads to a ranging error. However, this is not the most important source of errors. In almost any environment satellite signals are reflected at obstacles (buildings, trees, ground, ...) and these reflected signals add on to the line-of-sight (LOS) satellite signals. This phenomenon is called multipath.

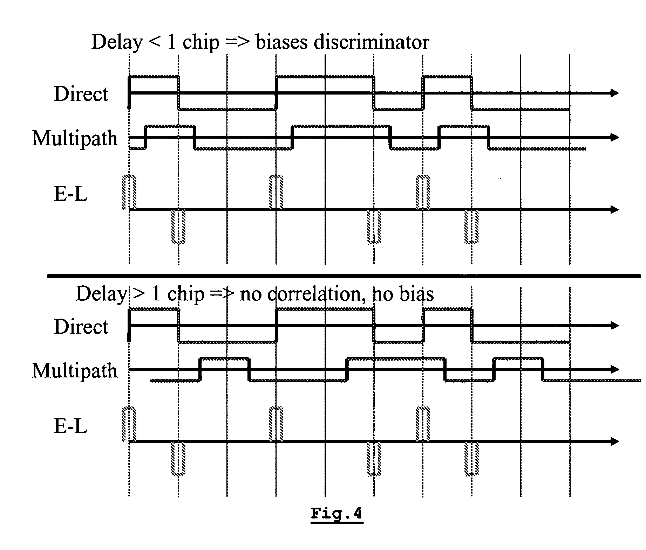

Fig.4 shows the impact of a single multipath signal on a BPSK modulation. It distinguishes between two cases.
In the first case the multipath signal is delayed by less than one chip with respect to the direct LOS signal. The third graph shows an E-L function that would be perfectly synchronized with the direct signal. As in Fig.1, the correlation between the direct signal and the E-L signal is zero, but it can be observed that the average value of the product of the multipath signal with the E-L signal is not zero (in the case of the figure, it is negative). Hence the multipath leads to a bias in the discriminator output and causes a synchronisation error. In the second case the multipath signal is delayed by more than one chip. In this case the early minus late signal E-L does not correlate with the multipath signal anymore and no error occurs.

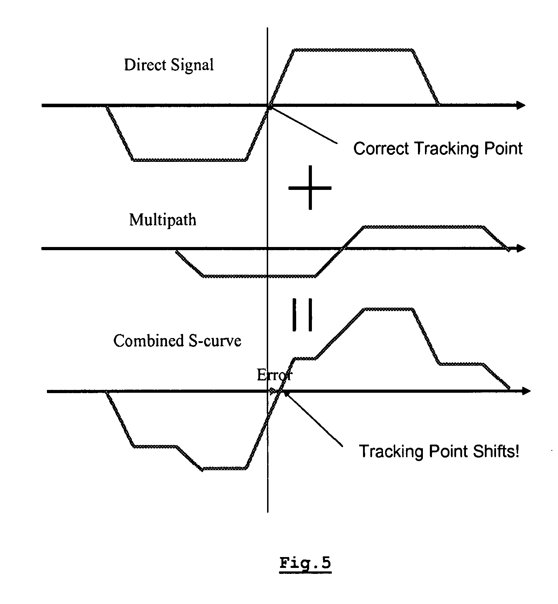

As the correlation carried out in the discriminator is linear, the impact of multipath can be studied via the S-curve as well. The multipath signal generates a time-shifted S-curve that adds on to the S-curve of the direct signal. This moves the tracking point, as illustrated in Fig.5. Also for BOC signals the tracking point is almost always altered by multipath if its delay is less than one chip, as the S-curve is non-zero except at a few zero-crossings.

In the past many multipath mitigation methods have been proposed. These methods do not specifically address the BOC family of modulations.

Patent document US-A-5414729 is related to a receiver for PRN encoded signals, wherein a plurality of correlation signals are fed to a parameter estimator, from which the delay, amplitude and phase parameters of the direct path signal, as well as any multipath signals, may be estimated. This estimation however takes place by solving a system of equations, for example through a least-squares calculation, which requires complex and expensive hardware and software capabilities.

US-A-5953367 is related to a receiver for PRN encoded signals, comprising a plurality of DLL correlators provided in each of the receiver's multiple processing channels. These correlators are combined in such a way as to build a DLL discriminator which is not affected by most of the multipath errors. This improves the tracking in the presence of multipath, but requires a significant modification of the DLL architecture, in comparison to wide spacing and narrow spacing DLL's.

Application US-A-5901183 is related to a receiver for PRN encoded signals, wherein both the receiver DLL code and PLL carrier loops include a loop component that senses an error in its main loop caused by the presence of a multipath signal. A compound correlator loop is formed of a primary correlator and a secondary correlator that senses and corrects for multipath induced tracking error of the primary correlator.

Document US-A-5781152 is related to a method wherein four pseudorandom code replicas are used, namely a first set of early and late codes, with a first early-late spacing 2d, and a second set with a second early-late spacing 2kd. The multipath error is estimated from an extrapolation on the basis of correlation values measured with these two sets of codes.

Document US-A-5966403 relates to a method and apparatus for minimizing the residual multipath distortion signal present in a received signal, by using a non-uniform weighting function for said estimation/minimization.

International application WO/03014761 describes a method and receiver for ranging applications wherein a multipath estimation is performed on the basis of a predefined formula. Said formula is based on at least four correlation values between at least four different versions of PRN code and the PRN encoded signal sent by the transmitter. The function in question is preferably a linear combination of normalized correlation values. According to WO/03014761, the constant coefficients employed in the linear combination are obtained through an optimization to best approximate the error from multipath having an amplitude of one tenth of the direct signal. This disclosure requires an extra correlation device to perform multipath mitigation.

Document US2004/208236 describes a method for multipath mitigation based on the estimation of multipath parameters from the observation of the chip shape distortion, using an estimation algorithm similar to the one discussed in US-A-5414729.

Document US-A-6493378 discloses the usage of strobes to mitigate the impact of multipath on the delay tracking. The method does not take benefit of the in-chip polarity changes specific to the BOC modulation.

### Aims of the invention

The present invention aims to provide a device and method for receiving and processing spread spectrum signals, allowing elimination of multipath errors for multipath delays larger than the distance between the start of the chipping pulse and the first polarity change within the chipping pulse.

### Summary of the invention

The present invention is related to a method for aligning a local spreading code with a spreading code in a received signal, said local spreading code and received spreading code comprising a plurality of chipping pulses having at least one polarity change within each chipping pulse and being modulated with a pseudo-random noise code, said method comprising the steps of :
- generating a selection pulse modulated with said pseudo-random noise code, said pulse being indicative of one of said polarity changes within a chipping pulse of said local spreading code, said polarity change not coinciding with the start of said chipping pulse, and wherein said selection pulse is active in a region around said polarity change that does not overlap with other polarity changes, and inactive elsewhere,
- correlating said modulated selection pulse with said received signal,
- using the result of said correlating step for aligning said spreading code in said received signal and said local spreading code. In practice, the result of the correlating step is used as the discriminator of a feedback loop, as known in the art.

According to the preferred embodiment, said polarity change is the first polarity change within a chipping pulse. The received signal is typically used for measuring a range, i.e. the distance between a satellite transmitter and receiver. The modulated selection pulse is equal to zero out of the region around said first polarity change. This region has to be small enough not to contain other polarity changes of the pulse.

In a preferred embodiment the step of generating the modulated selection pulse comprises generating an early replica and a late replica of the local spreading code and subsequently deriving the modulated selection pulse by selecting the pulse in the difference signal of the early replica and the late replica.

Preferably the generated selection pulse indicative of the first polarity change is only active within a preset phase range of the chipping pulse. Advantageously the phase range is set by means of two programmable thresholds. In a specific embodiment the two thresholds are asymmetrical with respect to the first polarity change.

Preferably the chipping pulses have multiple piecewise constant real or complex levels. Also the pseudo-random code may be real or complex.

The received signal is typically a baseband signal, which is typically an RF signal that has been downconverted to baseband. The received signal is advantageously a Binary Offset Carrier signal, i.e. the signal contains a BOC-modulated spreading code (or several types of BOC-modulated codes) buried in noise.

According to an embodiment, the received signal may be a Multiplexed Binary Offset Carrier (MBOC) signal, comprising chips that are modulated with a subcarrier having a first frequency and chips that are modulated with a subcarrier having a second frequency, the first frequency being higher than the second frequency. According to this embodiment, said selection pulse is indicative of a polarity change within each chip modulated with said higher first frequency, and not indicative of any polarity change within chips modulated with said lower second frequency. Preferably in the latter embodiment, said polarity change is the first polarity change within each chip modulated with said higher first frequency.

According to a second aspect of the invention, a circuit is described for aligning a local spreading code with a spreading code in a received signal, said aligning taking place according to the method of the invention, said local spreading code and said received spreading code comprising a plurality of chipping pulses having at least one polarity change within each chipping pulse and being modulated with a pseudo-random noise code, said circuit comprising generator means for generating a replica of said local spreading code, the circuit further comprising : generator means for generating a selection pulse, a modulator for modulating said selection pulse and a correlator arranged for correlating said received signal with said modulated selection pulse.

The circuit may further comprise storage means for storing thresholds between which said selection pulse is active, said storing means being in connection with said generator means. Said storing means may be a lookup table.

Said generator means may be arranged for generating an early replica and a late replica of said local spreading code (early and late with respect to the first replica which is then referred to as the punctual replica) and a means for producing the difference signal EL between said early and late replicas, and said modulator may comprise a means for producing the modulated selection pulse on the basis of said selection pulse and said E-L signal.

According to another embodiment, said circuit does not comprise generator means arranged for generating an early replica and a late replica of said local spreading code, and said modulator comprises a means for producing the modulated selection pulse on the basis of said selection pulse and the local spreading code.

The circuit for aligning may further comprise a means for generating an indication signal whose value is indicative of a first or second subcarrier frequency with which a chipping pulse is modulated, the first frequency being higher than the second frequency, and wherein a means is present for producing said selection pulse only during chipping pulses modulated with said first frequency. In the latter case, the circuit may comprise a means for producing two versions of the modulated selection pulse, based on two values of said indication signal, the circuit comprising two correlators, arranged for correlating the received signal with each version of the modulated selection pulse, and a multiplexer, arranged for selecting between the outputs of said two correlators, on the basis of a navigation bit. The invention is equally related to a satellite receiver comprising a circuit for aligning according to the invention.

The circuit typically further comprises a second correlator for correlating the received signal with a punctual replica of the local spreading code.

### Short description of the drawings

Fig.1 represents the tracking of a BPSK signal.

Fig.2 represents a prior art tracking channel implementation.

Fig.3 represents S-curves for BPSK and BOC(N,N).

Fig.4 represents the effect of multipath on a BPSK signal.

Fig.5 represents a S-curve in presence of multipath.

Fig.6 represents BOC tracking.

Fig.7 represents a S-curve of pulse-select discriminator.

Fig.8 represents the selection pulse generation.

Fig.9 represents a pulse selection signal.

Fig.10 represents a discriminator with modulated tracking pulse.

Fig.11 represents an embodiment of the circuit according to the invention.

Fig.12 represents another embodiment of the circuit according to the invention.

Fig.13 represents a multipath envelope comparison.

Fig. 14 represents an MBOC signal and the selection pulse used in combination with such a signal.

Fig. 15 shows a first variation of the circuit adapted to the MBOC signal shown in Fig. 14.

Fig. 16 shows a second variation of the circuit adapted to the MBOC signal shown in Fig. 14.

Fig. 17 shows a further variation of the circuit, to make it usable in combination with a particular type of MBOC signal.

### Detailed description of the invention

The present invention is specifically related to spreading codes modulated with a subcarrier wherein at least one polarity change takes place within one chip, such as BOC-type codes. In the following description, the invention is first explained using the example of standard BOC modulation, wherein each chip is modulated with the same subcarrier frequency. The extension to the MBOC case is discussed later.

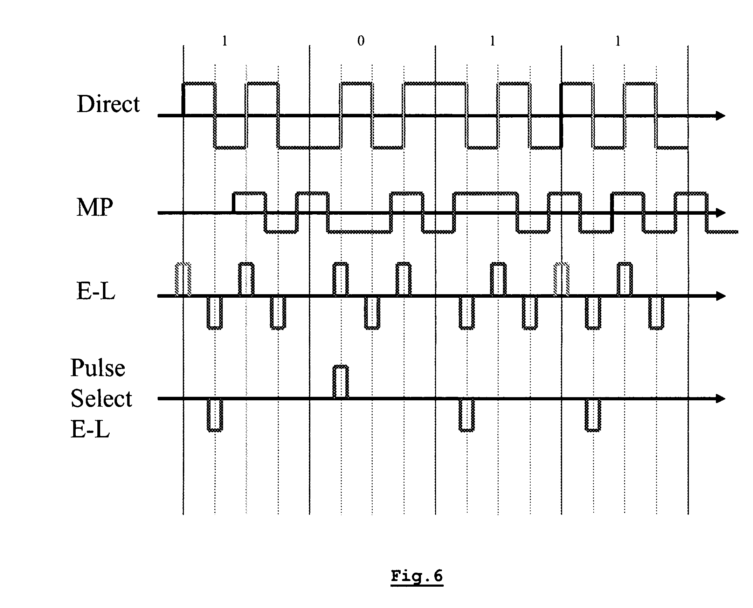

In the case of BOC modulation each zero-crossing (i.e. polarity change) of the subcarrier generates an E-L pulse. Polarity changes at the changeover between successive chips generate E-L pulses as well. Whether or not there is such a polarity change at the change-over depends on the spreading code. This is illustrated in Fig.6 for a BOC(2.N,N) signal. The figure also shows a multipath (MP) signal delayed by 3/4 of a subcarrier period. In case of Fig.6 all E-L pulses correlate with the multipath signal except the first one introduced by zero-crossing of the subcarrier, because the multipath signal is still in the previous, uncorrelated chip when these E-L pulses occur.

In the solution of the present invention only those E-L pulses due to one polarity change in the chipping pulse are used to construct the discriminator while all other pulses are ignored. Said 'one polarity change' is a polarity change taking place within a chipping pulse, with the exclusion of possible polarity changes taking place at the start or end of the chip. In the preferred case, said one polarity change is the first polarity change taking place within the chipping pulse, not taking into account a possible polarity change at the start of the chip. The selected pulses are shown in the last graph of Fig.6 in the preferred case wherein the first polarity change is selected.

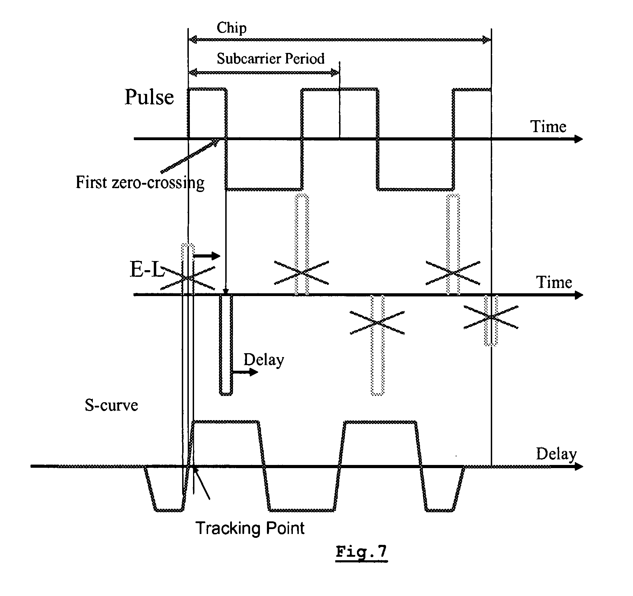

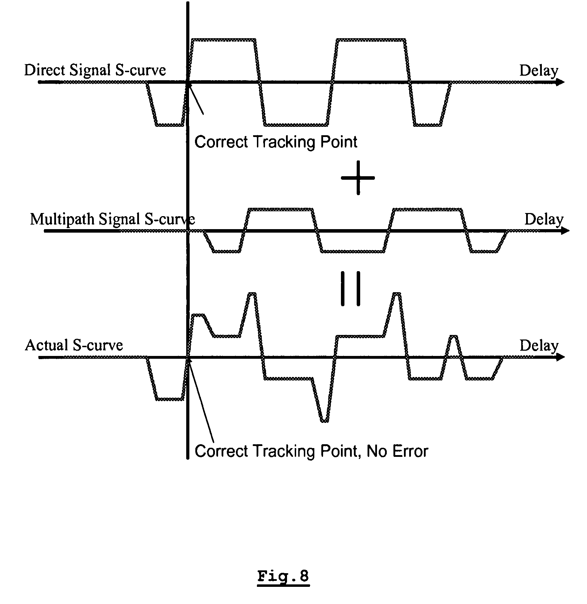

In Fig.7 the resulting S-curve is shown for a BOC(2.N,N) of which the subcarrier is shifted with respect to the beginning of the chip by one fourth of the subcarrier period. This corresponds to a so-called cosine-BOC variant. The S-curve is asymmetric with respect to the tracking point. In case of multipath the S-curve is the sum of this S-curve and the same but scaled S-curve shifted to the right over a distance equal to the multipath delay. If the multipath delay is larger than the distance between the start of a chip and the first zero-crossing of the subcarrier within that chip plus half the tracking gate width, it has no influence anymore on the tracking point, which is a remarkable result. Such case is illustrated in Fig.8.

It should be remarked that the S-curve has various zero-crossings. Many methods to avoid acquisition on a wrong tracking point exist in the art. One way is acquiring with an advanced local signal that is systematically delayed. The first discriminator sign change corresponds to the stable tracking point.

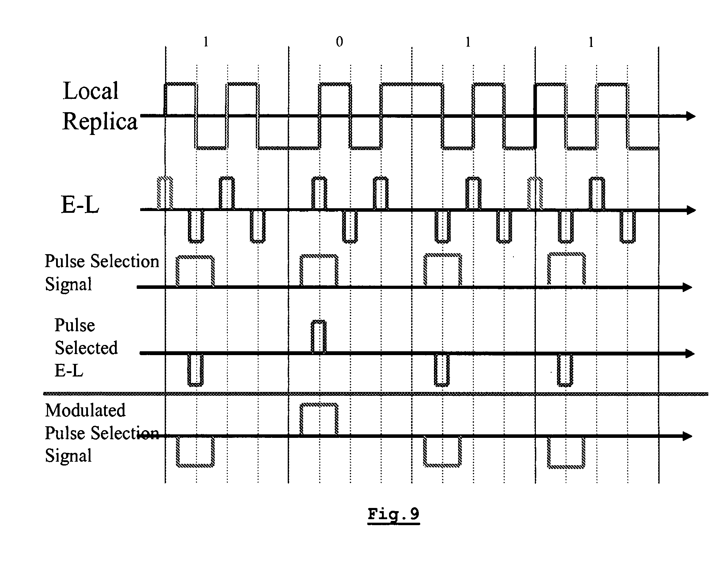

A practical implementation of the pulse selection method in a digital receiver involves the generation of a signal at the same frequency as the chipping pulse that is active in a region around the first polarity change within the chipping pulse and inactive everywhere else. If this signal is active the E-L signal is passed, otherwise it is ignored or substituted by zero. The concept of selection pulse is further clarified in Fig.9.

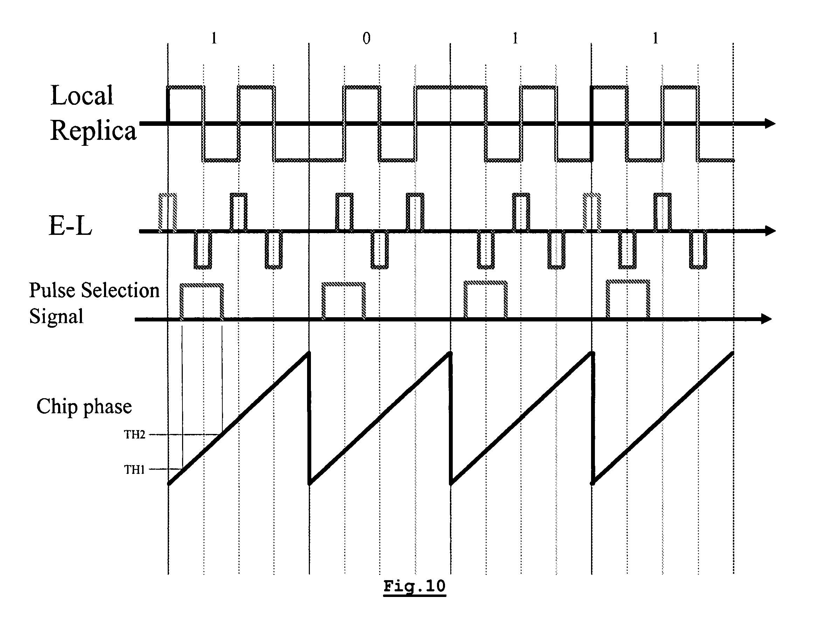

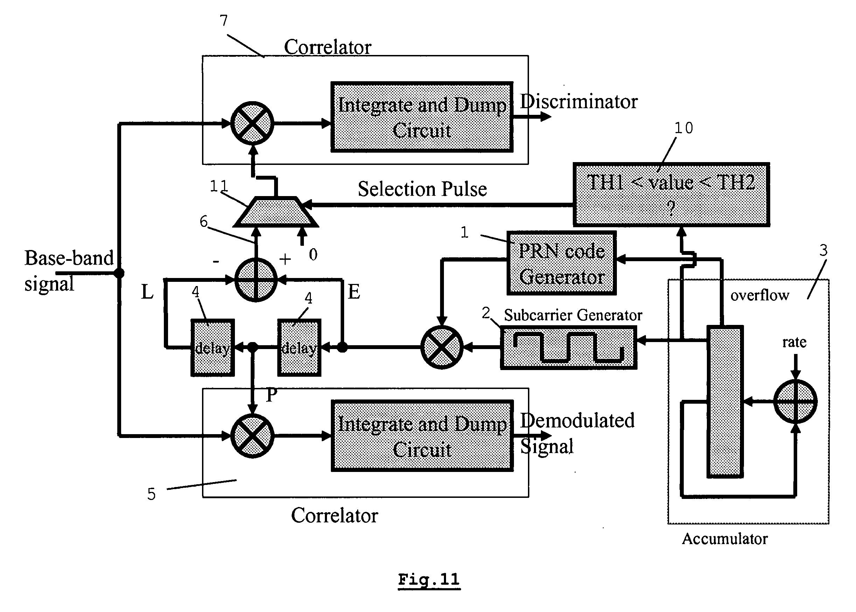

In the approach according to the present invention the common architecture as shown in Fig.2 is modified such that only the selected E-L pulses are fed to the discriminator correlator. Before describing the modified architecture, it is important to note that the contents of the NCO accumulator represents the phase within a chip. In its turn, the phase within a chip can be used to generate the pulse selection signal, as illustrated in Fig. 10. The first three graphs in Fig.10 are the same as those of Fig. 9. The fourth graph corresponds to the phase within a chip. It can be seen that the pulse selection signal is active within a fixed range of that phase (TH1 to TH2). This observation leads to a first embodiment of the invention, as illustrated in Fig.11. Like numerals indicate the same components described with respect to Fig. 2. The contents of the NCO accumulator is compared to two programmable thresholds (TH1 and TH2), and when it is larger than TH1 and lower than TH2, the pulse selection signal is activated. Item 10 drawn in connection with the NCO 3, symbolises a means for storing TH1 and TH2 and for generating a pulse only when the phase is between TH1 and TH2. By feeding the E-L signal to the multiplexer 11 together with the selection pulse, the E-L signal is fed to the correlator 7 only when that selection pulse signal is activated. The thresholds are set in such a way that the resulting pulse selection signal is active in a region around the first subcarrier switch-over that does not overlap with the gate-width region around other switch-overs and inactive elsewhere.

In most practical cases, the chip phase resolution achievable by the NCO accumulator is unnecessarily large for the purpose of generating the pulse selection signal, such that only the N most significant bits (MSB) of the accumulator can be used and compared to the thresholds.

Alternatively, the comparison with TH1 and TH2 can be implemented in the form of a look-up table, indexed by the N MSBs of the accumulator.

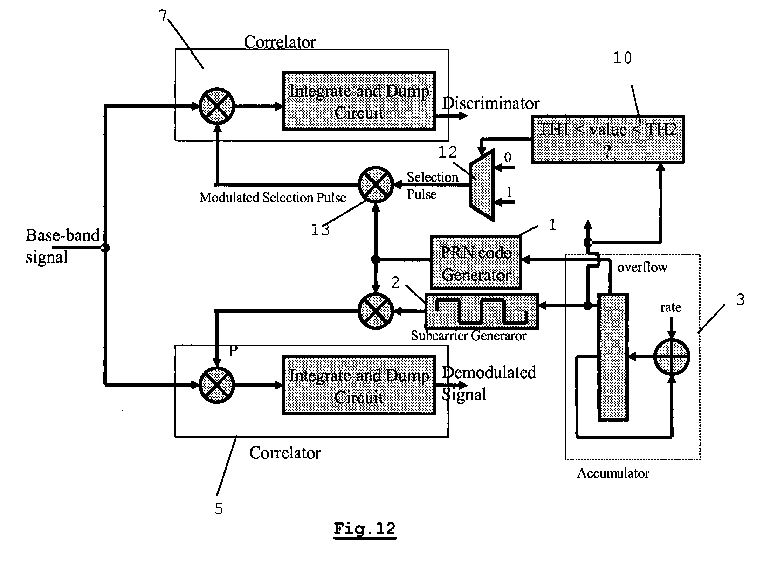

A further improvement stems from the observation that, by multiplying the pulse selection signal with the chips of the PRN code, a signal is obtained that is directly usable as pulse-selected E-L signal and fed into the discriminator correlator. This signal is illustrated by the last graph of Fig.9 (modulated pulse selection signal). The corresponding implementation is presented in Fig.12. In that figure, the MUX 12 outputs 1 when the contents of the accumulator 3 is between TH1 and TH2, and zero otherwise. In multiplier 13, the selection pulse is modulated directly with the PRN code to obtain the modulated selection pulse. The advantage of this embodiment with respect to the one shown in Fig.11 is that for the alignment there is no longer a need for generation of early and late local replicas. The circuit of Fig. 12 therefore does not comprise early late delay blocks for generating early-late replicas. It is clear that some of the components shown in Fig. 11 and 12 can be replaced by equivalent components, known to the skilled person. In that respect, multiplexer 11 (Fig. 11) and multiplier 13 (Fig. 12) are embodiments of a general 'means for producing a modulated selection pulse' on the basis of the (non-modulated) selection pulse and respectively the E-L signal (Fig. 11) and the PRN code (Fig. 12).

An additional benefit of the invention, be it embodied as in Fig.11 or as in Fig.12, is that the width of the pulse selection signal, and hence the gate width, can be flexibly selected : it is only limited by the resolution of the digital accumulator. This is a remarkable improvement over prior art techniques where the gate width must be a larger-than-1 integer multiple of the sampling interval of the signal. This flexibility offers a way to optimize the gate width to reach optimal multipath rejection.

In some receiver architectures a timing strobe at the beginning of the chipping pulse and at any level change is explicitly available. The latter may be available from local replica generation or from the early-minus late signal itself. For this type of architectures the pulse selection signal can be activated by a delayed version of the strobe that indicates the beginning of the chipping pulse and deactivated by a delayed version of the first strobe corresponding to a subcarrier alternation. This solution, however, does not offer the same amount of flexibility as the architectures in Fig.11 and Fig.12.

The fact that the thresholds TH1 and TH2 are programmable makes it possible for the same hardware to process any type of signals with piece-wise constant chip function, including AltBOC, which is functionally equivalent to BOC(15,10). The thresholds do not necessarily have to be programmed to be symmetric around the chipping pulse transition. An asymmetric choice of the thresholds with respect to the pulse transition can for instance help compensating correlation function distortions due to front-end filtering.

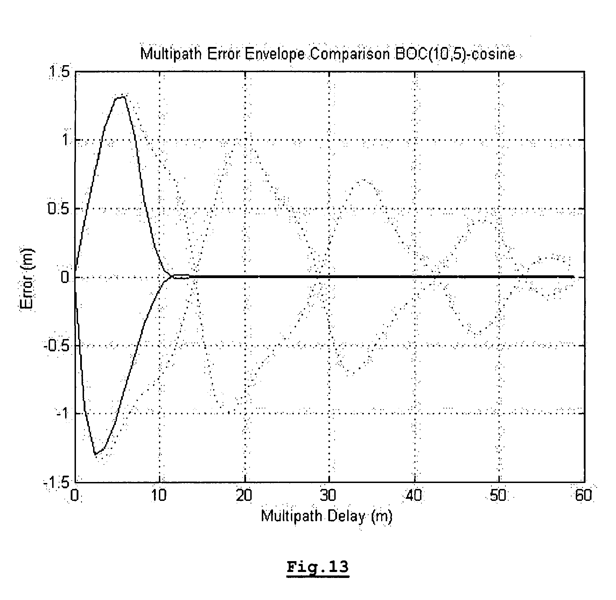

The multipath advantage of the method is large. For the BOC(10,5) signal used in the E6 band (1278.75 MHz) of Galileo for instance, this method eliminates the influence of multipath with a delay larger than 7.5 meter, which is an improvement by a factor 8 with respect to the prior-art E-L correlator that is sensitive to multipath with delays up to 60 meters. A comparison between the error envelope of the E6 signal received with the prior-art method and the same signal received with the present invention is shown in Fig.13. This figure shows the error that would be caused by a multipath signal with amplitude half as large as that of the direct LOS signal and carrier in-phase and in anti-phase with the LOS carrier. The solid line corresponds to the present invention and the dotted line to the prior-art method for tracking of this signal. This figure takes into account the impact of filtering in the front-end.

It has to be remarked that the approach of the present invention increases thermal noise, because the number of feedback pulses per second decreases. The standard deviation of thermal noise contribution in the ranging error is proportional to the square root of the number of pulses per second. If a prior-art E-L correlator is applied to a BOC(M,N) signal the number of pulses per second is 2.M-N/2 if a subcarrier zero-crossing coincides with the start of the chip and 2.M+N/2 if it doesn't. In the proposed method the number of zero-crossings equals N. For the BOC(10,5) signal in the E6 band of Galileo the thermal noise error would scale with a factor 2.12. Because the thermal noise error is usually an order of magnitude smaller than the multipath error, in most situations the overall performance of the receiver is still significantly improved by the presented invention.

The presented invention can also be extended to the MBOC chipping pulse shapes as will be explained now.

The MBOC (Multiplexed BOC) modulation results from the combination of two traditional BOC modulations with different subcarrier frequencies. Two MBOC variants have been defined.

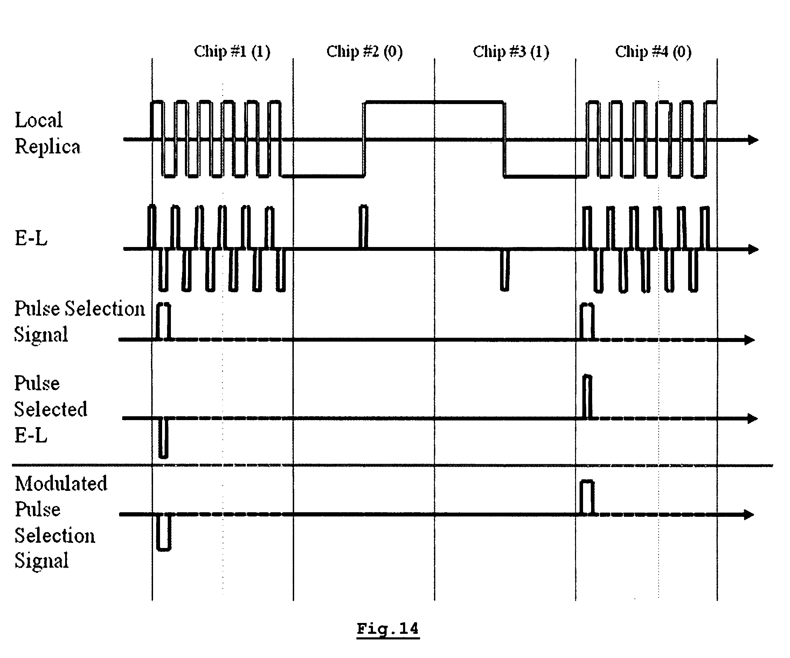

In a first MBOC variant, a predefined subset of the chips of the PRN code is modulated by one kind of subcarrier (e.g. BOC(1,1)), while the remaining chips are modulated by another kind of subcarrier, with higher subcarrier frequency (e.g. BOC(6,1)). Such MBOC variant is considered for instance for the pilot component of future GPS L1 signals. It is illustrated in the first graph of Fig.14., where chips#1 and #4 are modulated with a fast BOC(6,1) subcarrier and chips#2 and #3 with a slow BOC(1,1) subcarrier. The E-L signal is shown in the second line. It is clear that the position of the E-L pulses within each chip depends on the type of subcarrier that the chip is modulated with. For best multipath mitigation, only the first E-L pulse within those chips modulated with the fast subcarrier should be considered for the discriminator. This leads to the pulse selection signal as represented in the third line of Fig.14. In other words, the only difference with the case of BOC discussed above is that the selection pulse must only be active during the subset of chips modulated with a fast subcarrier.

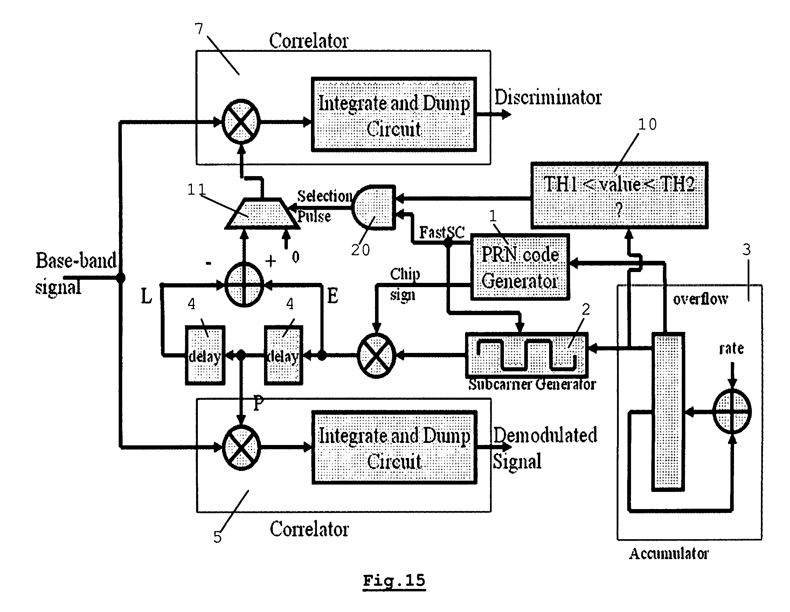

Fig.15. represents an extension of the architecture of Fig.11. where support of the MBOC modulation is achieved by adding a "FastSC" (fast subcarrier) signal and associated logic. The FastSC signal is generated by the PRN code generator and is 1 during chips that must be modulated by a fast subcarrier, and 0 otherwise. The FastSC signal is fed into the subcarrier generator which generates the slow subcarrier (e.g. BOC(1,1)) if FastSC is 0, or the fast subcarrier (e.g. BOC(6,1)) if FastSC is 1. Further, FastSC is ANDed in AND-gate 20 with the result of the comparison of the NCO accumulator with TH1 and TH2: the resulting selection pulse is active only when FastSC is 1, i.e. during chips modulated by a fast subcarrier.

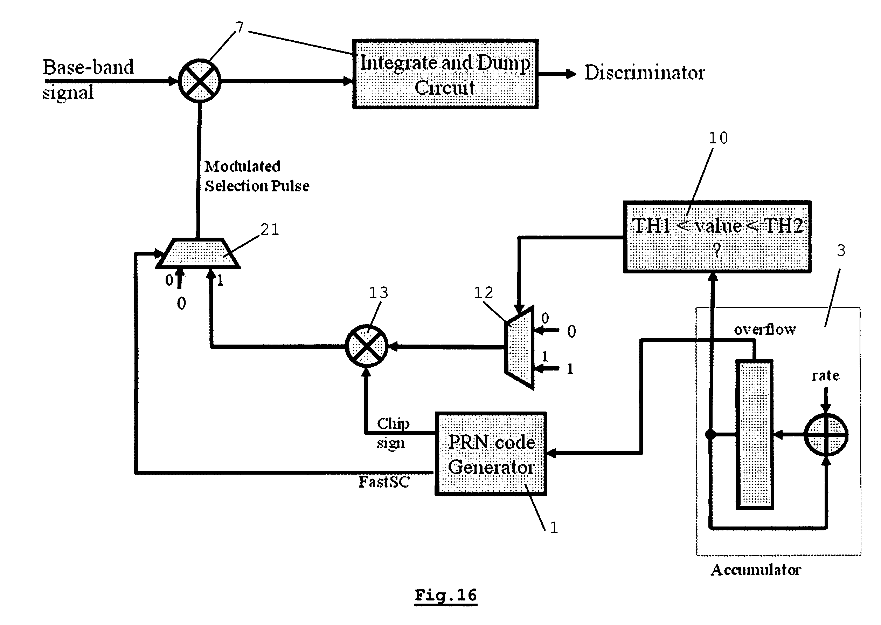

Likewise, Fig.16. represents an extension of the architecture of Fig.12. for supporting the MBOC modulation. For the sake of clarity, the P-correlator is not shown anymore in the figure. By combining the selection pulse with the FastSC signal in multiplexer 21, the final modulated selection pulse is non-zero only when both the NCO accumulator value is between TH1 and TH2 and the FastSC signal is 1. The resulting modulated selection pulse is represented in the last graph of Fig.14.

In a second MBOC variant, the subset of chips modulated with a slow and a fast subcarrier is dependent on the navigation bit. If the navigation bit is 1, a predefined subset A of the chips is modulated with a slow subcarrier (e.g. BOC(1,1)) and the other chips (forming subset B) are modulated with a fast subcarrier (e.g. BOC(6,1)). If the navigation bit is 0, the subcarrier type is swapped: subset A is modulated with the fast subcarrier and subset B with the slow. Such MBOC variant is considered for instance for the combined pilot and data components of the Galileo L1 signal. The principles exposed above still apply, the only difference being that two cases must be considered (navigation bit 1 or navigation bit 0). At the end of the integrate-and-dump interval, the navigation bits are decoded in a standard manner well-known to the skilled person, and they are used to select between the two cases.

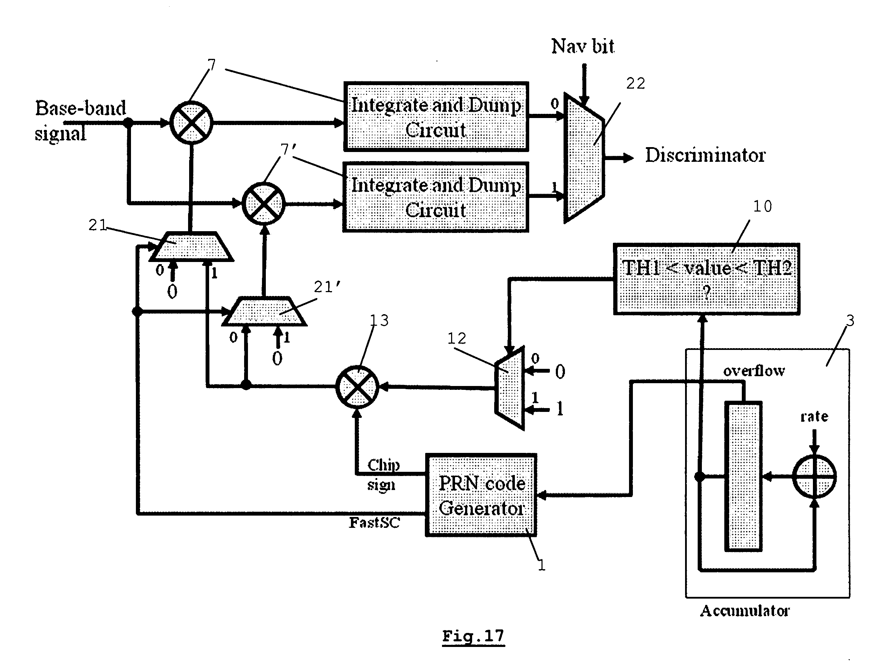

As an illustration, Fig.17. represents an extension of Fig.16. where a second integrate-and-dump circuit has been added to deal with the two navigation bit cases. The first of these circuits is active when the NCO accumulator value is between TH1 and TH2 and FastSC is 1. The second one is active when the NCO accumulator value is between TH1 and TH2 and "FastSC" is 0. At the end of the integrate and dump interval, the navigation bit obtained by traditional means not shown on the figure is used to select the discriminator value. For this purpose, the circuit comprises two multiplexers 21 and 21', and two correlators 7 and 7'. An additional multiplexer 22 decides, on the basis of the navigation bit, which of the correlators is used for determining the discriminator.

## Claims

1. Method for aligning a local spreading code with a spreading code in a received signal, said local spreading code and received spreading code comprising a plurality of chipping pulses having at least one polarity change within each chipping pulse and being modulated with a pseudo-random noise code, said method comprising the steps of :
- generating a selection pulse modulated with said pseudo-random noise code, said pulse being indicative of the first of said polarity changes within a chipping pulse of said local spreading code, said first polarity change not coinciding with the start of said chipping pulse, and wherein said selection pulse is active in a region around said first polarity change that does not overlap with other polarity changes, and inactive elsewhere,
- correlating said modulated selection pulse with said received signal,
- using the result of said correlating step for aligning said spreading code in said received signal and said local spreading code.

2. Method for aligning as in claim 1, wherein said step of generating said modulated selection pulse comprises generating an early replica and a late replica of said local spreading code and subsequently deriving said modulated selection pulse by selecting said pulse in the difference signal of said early replica and said late replica.

3. Method for aligning as in claim 1 or 2, wherein said generated modulated selection pulse indicative of said polarity change is only active within a preset phase range of said chipping pulse.

4. Method for aligning as in claim 3, wherein said phase range is set by means of two programmable thresholds.

5. Method for aligning as in claim 4, wherein said two thresholds are asymmetrical with respect to said polarity change.

6. Method for aligning as in any of the preceding claims, wherein said received signal is a baseband signal.

7. Method for aligning as in any of the preceding claims, wherein said received signal is a Binary Offset Carrier signal.

8. Method for aligning as in any of the preceding claims, wherein said received signal is a Multiplexed Binary Offset Carrier signal, comprising chips that are modulated with a subcarrier having a first frequency and chips that are modulated with a subcarrier having a second frequency, the first frequency being higher than the second frequency, and wherein said selection pulse is indicative of the first polarity change within each chip modulated with said higher first frequency, and not indicative of any polarity change within chips modulated with said lower second frequency.

9. Circuit for aligning a local spreading code with a spreading code in a received signal, said aligning taking place according to the method of any one of claims 1 to 8, said local spreading code and said received spreading code comprising a plurality of chipping pulses having at least one polarity change within each chipping pulse and being modulated with a pseudo-random noise code, said circuit comprising generator means (1,2,3) for generating a replica of said local spreading code, the circuit further comprising : generator means (10) for generating a selection pulse, a modulator (11,13) for modulating said selection pulse and a correlator (7) arranged for correlating said received signal with said modulated selection pulse.

10. Circuit for aligning as in claim 9, comprising storage means for storing thresholds between which said selection pulse is active, said storing means being in connection with said generator means.

11. Circuit for aligning as in claim 10, wherein said storing means is a lookup table.

12. Circuit for aligning as in any one of claims 9 to 11, wherein said generator means is further arranged for generating an early replica and a late replica of said local spreading code and a means for producing the difference signal E-L (6) between said early and late replicas, and wherein said modulator comprises a means (11) for producing the modulated selection pulse on the basis of said selection pulse and said E-L signal.

13. Circuit for aligning as in any one of claims 9 to 11, wherein said circuit does not comprise generator means arranged for generating an early replica and a late replica of said local spreading code, and wherein said modulator comprises a means (13) for producing the modulated selection pulse on the basis of said selection pulse and the local spreading code.

14. Circuit for aligning according to any one of claims 9 to 13, further comprising a means for generating an indication signal whose value is indicative of a first or second subcarrier frequency with which a chipping pulse is modulated, the first frequency being higher than the second frequency, and wherein a means (20,21) is present for producing said selection pulse only during chipping pulses modulated with said first frequency.

15. Circuit according to claim 14, comprising a means for producing two versions of the modulated selection pulse, based on two values of said indication signal, the circuit comprising two correlators (7,7'), arranged for correlating the received signal with each version of the modulated selection pulse, and a multiplexer (22), arranged for selecting between the outputs of said two correlators, on the basis of a navigation bit.

16. Satellite receiver comprising a circuit for aligning as in any of claims 9 to 15.

## Patentansprüche

1. Verfahren zum Synchronisieren eines lokalen Spreizcodes mit einem Spreizcode in einem empfangenen Signal, wobei der lokale Spreizcode und der empfangene Spreizcode eine Mehrzahl von Chip-Impulsen mit mindestens einer Polaritätsänderung innerhalb eines jeden Chip-Impulses umfassen und mit einem pseudozufälligen Rauschcode moduliert werden, wobei das Verfahren die folgenden Schritte umfasst:
- Generieren eines Auswahlimpulses, der mit dem pseudozufälligen Rauschcode moduliert ist, wobei der Impuls die erste der Polaritätsänderungen innerhalb eines Chip-Impulses des lokalen Spreizcodes anzeigt, wobei die erste Polaritätsänderung nicht mit dem Anfang des Chip-Impulses übereinstimmt und der Auswahlimpuls in einem Bereich um die erste Polaritätsänderung, die sich nicht mit anderen Polaritätsänderungen überlappt, aktiv und anderswo inaktiv ist,
- Korrelieren des modulierten Auswahlimpulses mit dem empfangenen Signal,
- Verwenden des Ergebnisses des Korrelationsschritts zum Synchronisieren des Spreizcodes im empfangenen Signal und im lokalen Spreizcode.

2. Synchronisierverfahren nach Anspruch 1, wobei der Schritt des Generierens des modulierten Auswahlimpulses ein Generieren einer frühen Nachbildung und einer späten Nachbildung des lokalen Spreizcodes und anschließendes Ableiten des modulierten Auswahlimpulses durch Auswählen des Impulses im Differenzsignal der frühen Nachbildung und der späten Nachbildung umfasst.

3. Synchronisierverfahren nach Anspruch 1 oder 2, wobei der generierte modulierte Auswahlimpuls, der die Polaritätsänderung anzeigt, nur innerhalb eines voreingestellten Phasenbereichs des Chip-Impulses aktiv ist.

4. Synchronisierverfahren nach Anspruch 3, wobei der Phasenbereich mittels zweier programmierbarer Schwellen eingestellt wird.

5. Synchronisierverfahren nach Anspruch 4, wobei die beiden Schwellen in Bezug auf die Polaritätsänderung asymmetrisch sind.

6. Synchronisierverfahren nach einem der vorhergehenden Ansprüche, wobei das empfangene Signal ein Basisbandsignal ist.

7. Synchronisierverfahren nach einem der vorhergehenden Ansprüche, wobei das empfangene Signal ein binäres Offset-Trägersignal ist.

8. Synchronisierverfahren nach einem der vorhergehenden Ansprüche, wobei das empfangene Signal ein gemultiplextes binäres Offset-Trägersignal ist, das Chips, die mit einem Unterträger mit einer ersten Frequenz moduliert sind, und Chips, die mit einem Unterträger mit einer zweiten Frequenz moduliert sind, umfasst, wobei die erste Frequenz höher als die zweite Frequenz ist und wobei der Auswahlimpuls die erste Polaritätsänderung innerhalb eines jeden Chips anzeigt, der mit der höheren ersten Frequenz moduliert ist, und keine Polaritätsänderung innerhalb von Chips anzeigt, die mit der niedrigeren zweiten Frequenz moduliert sind.

9. Schaltung zum Synchronisieren eines lokalen Spreizcodes mit einem Spreizcode in einem empfangenen Signal, wobei die Synchronisierung gemäß dem Verfahren nach einem der Ansprüche 1 bis 8 erfolgt, der lokale Spreizcode und der empfangene Spreizcode eine Mehrzahl von Chip-Impulsen mit mindestens einer Polaritätsänderung innerhalb eines jeden Chip-Impulses umfassen und mit einem pseudozufälligen Rauschcode moduliert werden, wobei die Schaltung Generatormittel (1, 2, 3) zum Generieren einer Nachbildung des lokalen Spreizcodes umfasst, und die Schaltung ferner umfasst: Generatormittel (10) zum Generieren eines Auswahlimpulses, einen Modulator (11, 13) zum Modulieren des Auswahlimpulses und einen Korrelator (7), der so ausgelegt ist, dass er das empfangene Signal mit dem modulierten Auswahlimpuls korreliert.

10. Synchronisierschaltung nach Anspruch 9, umfassend Speichermittel zum Speichern von Schwellen, zwischen welchen der Auswahlimpuls aktiv ist, wobei die Speichermittel mit den Generatormitteln in Verbindung stehen.

11. Synchronisierschaltung nach Anspruch 10, wobei das Speichermittel eine Nachschlagetabelle ist.

12. Synchronisierschaltung nach einem der Ansprüche 9 bis 11, wobei das Generatormittel ferner so ausgelegt ist, dass es eine frühe Nachbildung und eine späte Nachbildung des lokalen Spreizcodes generiert, und ein Mittel zum Erzeugen des Differenzsignals E-L (6) zwischen den frühen und späten Nachbildungen, und wobei der Modulator ein Mittel (11) zum Erzeugen des modulierten Auswahlimpulses auf der Basis des Auswahlimpulses und des E-L-Signals umfasst.

13. Synchronisierschaltung nach einem der Ansprüche 9 bis 11, wobei die Schaltung kein Generatormittel umfasst, das so ausgelegt ist, dass es eine frühe Nachbildung und eine späte Nachbildung des lokalen Spreizcodes generiert, und wobei der Modulator ein Mittel (13) zum Erzeugen des modulierten Auswahlimpulses auf der Basis des Auswahlimpulses und des lokalen Spreizcodes umfasst.

14. Synchronisierschaltung nach einem der Ansprüche 9 bis 13, ferner umfassend ein Mittel zum Generieren eines Anzeigesignals, dessen Wert eine erste oder zweite Unterträgerfrequenz anzeigt, mit der ein Chip-Impuls moduliert ist, wobei die erste Frequenz höher als die zweite Frequenz ist, und wobei ein Mittel (20, 21) vorhanden ist, um den Auswahlimpuls nur während Chip-Impulsen zu erzeugen, die mit der ersten Frequenz moduliert sind.

15. Schaltung nach Anspruch 14, umfassend ein Mittel zum Erzeugen von zwei Versionen des modulierten Auswahlimpulses auf der Basis von zwei Werten des Anzeigesignals, wobei die Schaltung zwei Korrelatoren (7, 7'), die so ausgelegt sind, dass sie das empfangene Signal mit einer jeden Version des modulierten Auswahlimpulses korrelieren, und einen Multiplexer (22) umfasst, der so ausgelegt ist, dass er zwischen den Ausgaben der beiden Korrelatoren auf der Basis eines Navigationsbits auswählt.

16. Satelliten-Empfänger, umfassend eine Synchronisierschaltung nach einem der Ansprüche 9 bis 15.

## Revendications

1. Procédé d'alignement d'un code d'étalement local avec un code d'étalement dans un signal reçu, ledit code d'étalement local et ledit code d'étalement reçu comprenant une pluralité d'impulsions de délitage (« chipping ») présentant au moins une modification de polarité au sein de chaque impulsion de délitage et étant modulées avec un code de bruit pseudo-aléatoire, ledit procédé comprenant les étapes consistant à :
- générer une impulsion de sélection modulée avec ledit code de bruit pseudo-aléatoire, ladite impulsion étant indicative de la première desdites modifications de polarité au sein d'une impulsion de délitage dudit code d'étalement local, ladite première modification de polarité ne coïncidant pas avec le début de ladite impulsion de délitage, et dans lequel ladite impulsion de sélection est active dans une zone qui se situe autour de ladite première modification de polarité qui ne présente pas de chevauchement avec d'autres modifications de polarité, et elle est inactive ailleurs ;
- corréler ladite impulsion de sélection modulée avec ledit signal reçu ;
- utiliser le résultat de ladite étape de corrélation pour aligner ledit code d'étalement dans ledit signal reçu et dans ledit code d'étalement local.

2. Procédé d'alignement selon la revendication 1, dans lequel ladite étape de génération de ladite impulsion de sélection modulée comprend la génération d'une réplique en avance et d'une réplique en retard dudit code d'étalement local et subséquemment la dérivation de ladite impulsion de sélection modulée en sélectionnant ladite impulsion dans le signal de différence de ladite réplique en avance et de ladite réplique en retard.

3. Procédé d'alignement selon la revendication 1 ou 2, dans lequel ladite impulsion de sélection modulée générée indicative de ladite modification de polarité n'est active que dans une plage de phases prédéfinie de ladite impulsion de délitage.

4. Procédé d'alignement selon la revendication 3, dans lequel ladite plage de phases est définie au moyen de deux seuils programmables.

5. Procédé d'alignement selon la revendication 4, dans lequel lesdits deux seuils sont asymétriques relativement à ladite modification de polarité.

6. Procédé d'alignement selon l'une quelconque des revendications précédentes, dans lequel ledit signal reçu est un signal en bande de base.

7. Procédé d'alignement selon l'une quelconque des revendications précédentes, dans lequel ledit signal reçu est un signal de porteuse binaire décalé.

8. Procédé d'alignement selon l'une quelconque des revendications précédentes, dans lequel ledit signal reçu est un signal de porteuse binaire décalé multiplexé, comprenant des puces qui sont modulées avec une sous-porteuse présentant une première fréquence et des puces qui sont modulées avec une sous-porteuse présentant une deuxième fréquence, la première fréquence étant supérieure à la deuxième fréquence, et dans lequel ladite impulsion de sélection est indicative de la première modification de polarité au sein de chaque puce modulée avec ladite première fréquence supérieure, et n'est pas indicative d'une quelconque modification de polarité dans des puces modulées avec ladite deuxième fréquence inférieure.

9. Circuit d'alignement d'un code d'étalement local avec un code d'étalement dans un signal reçu, ledit alignement étant mis en oeuvre selon le procédé de l'une quelconque des revendications 1 à 8, ledit code d'étalement local et ledit code d'étalement reçu comprenant une pluralité d'impulsions de délitage présentant au moins une modification de polarité au sein de chaque impulsion de délitage et étant modulées avec un code de bruit pseudo-aléatoire, ledit circuit comprenant un moyen de générateur (1, 2, 3) pour générer une réplique dudit code d'étalement local, le circuit comprenant en outre : un moyen de générateur (10) pour générer une impulsion de sélection, un modulateur (11, 13) pour moduler ladite impulsion de sélection et un corrélateur (7) agencé pour corréler ledit signal reçu avec ladite impulsion de sélection modulée.

10. Circuit d'alignement selon la revendication 9, comprenant un moyen de stockage pour stocker des seuils entre lesquels ladite impulsion de sélection est active, ledit moyen de stockage étant en liaison avec ledit moyen de générateur.

11. Circuit d'alignement selon la revendication 10, dans lequel ledit moyen de stockage est une table de correspondance.

12. Circuit d'alignement selon l'une quelconque des revendications 9 à 11, dans lequel ledit moyen de générateur est en outre agencé pour générer une réplique en avance et une réplique en retard dudit code d'étalement local et un moyen pour produire le signal de différence E-L (6) entre lesdites répliques en avance et en retard, et dans lequel ledit modulateur comprend un moyen (11) pour produire l'impulsion de sélection modulée sur la base de ladite impulsion de sélection et dudit signal E-L.

13. Circuit d'alignement selon l'une quelconque des revendications 9 à 11, dans lequel ledit circuit ne comprend pas de moyen de générateur agencé pour générer une réplique en avance et une réplique en retard dudit code d'étalement local, et dans lequel ledit modulateur comprend un moyen (13) pour produire l'impulsion de sélection modulée sur la base de ladite impulsion de sélection et du code d'étalement local.

14. Circuit d'alignement selon l'une quelconque des revendications 9 à 13, comprenant en outre un moyen pour générer un signal d'indication dont la valeur est indicative d'une première ou d'une deuxième fréquence de sous-porteuse avec laquelle une impulsion de délitage est modulée, la première fréquence étant supérieure à la deuxième fréquence, et dans lequel un moyen (20, 21) est présent pour produire ladite impulsion de sélection uniquement au cours d'impulsions de délitage modulées avec ladite première fréquence.

15. Circuit selon la revendication 14, comprenant un moyen pour produire deux versions de l'impulsion de sélection modulée, sur la base de deux valeurs dudit signal d'indication, le circuit comprenant deux corrélateurs (7, 7'), agencés pour corréler le signal reçu avec chaque version de l'impulsion de sélection modulée, et un multiplexeur (22), agencé pour choisir entre les sorties desdits deux corrélateurs, sur la base d'un bit de navigation.

16. Récepteur satellite comprenant un circuit d'alignement selon l'une quelconque des revendications 9 à 15.
